# EUROPEAN PATENT APPLICATION

(11) **EP 2 112 823 A1**
(43) Date of publication of application: **28.10.2009**
(21) Application number: 09153851.2
(22) Date of filing: 27.02.2009
(51) Int. Cl.: H04N 5/44, H04W 76/02

(54) **Broadcasting receiving apparatus, wireless interface apparatus and control method thereof**

(30) Priority: 23.04.2008 KR 20080037796
(71) Applicant: Samsung Electronics Co., Ltd., Suwon-si, Gyeonggi-do 442-742 (KR)
(72) Inventor: Song, Min-suk, Gyeonggi-do (KR)
(74) Representative: Brandon, Paul Laurence

(57) **Abstract**

Provided is a broadcasting receiving apparatus (100) which includes: a first communication unit (111) which communicates with a wireless interface apparatus (200) in a first communication manner based on identification information; a second communication unit (112) which communicates with the wireless interface apparatus (200) in a second communication manner; and a controller (150) which receives the identification information corresponding to the wireless interface apparatus (200) through the second communication unit (112).

## Description

### BACKGROUND OF INVENTION

### Field of Invention

Apparatuses and methods consistent with the present invention relate to a broadcasting receiving apparatus, a wireless interface apparatus and a control method thereof, in which communication is implemented based on predetermined identification information.

### Description of the Related Art

A broadcasting receiving apparatus receives a broadcasting signal from a broadcasting station or a video signal from an external apparatus such as a digital versatile disc (DVD) player or the like, and processes it to be displayed as an image. Such a broadcasting receiving apparatus is provided with a wireless interface apparatus such as a remote controller to receive a user's instruction such as power on/off, channel selection, display and volume control, recording reservation, etc.

In general, the wireless interface apparatus includes a non-interactive and directional communication means such as an infrared communication module. Such a directional communication means is restrained by things such as communication direction, communication range, etc.

Accordingly, the wireless interface apparatus has recently been provided with an interactive and omni-directional (or non-directional) communication means such as a Bluetooth module. The omni-directional communication means needs a setup process for communication connection to implement communication.

For example, before using the wireless interface apparatus having a built-in Bluetooth module, the broadcasting receiving apparatus has to search peripherals to obtain identification information such as a Bluetooth address, and a user has to select one wireless interface apparatus among the searched peripherals.

Meanwhile, it takes much time to search the peripherals in order to obtain the Bluetooth address, thereby causing inconvenience to a user while using the wireless interface apparatus.

On the other hand, without searching the peripherals as described above, a user may directly input the identification information such as the Bluetooth address through a user input unit provided in the broadcasting receiving apparatus.

However, the user input unit of the broadcasting receiving apparatus generally has the least buttons such as menu keys and arrow keys without number keys, and it is therefore difficult for a user to directly one by one input the Bluetooth address corresponding to, for example, about 5 bytes.

### SUMMARY OF THE INVENTION

Illustrative, non-limiting embodiments of the present invention overcome the above disadvantages and other disadvantages not described above. Also, the present invention is not required to overcome the disadvantages described above, and an illustrative, non-limiting embodiment of the present invention may not overcome any of the problems described above.

Accordingly, an aim of preferred embodiments of the present invention is to provide a broadcasting receiving apparatus, which is convenient to a user since a searching process or an identification-information input process is omitted when using an omni-directional wireless interface, a wireless interface apparatus and a control method thereof.

Another aim of preferred embodiments of the present invention is to provide a broadcasting receiving apparatus, which can store received identification information therein and implement communication with facility based on the stored identification information, a wireless interface apparatus and a control method thereof.

The present invention provides a broadcasting receiving apparatus including: a first communication unit which communicates with a wireless interface apparatus in a first communication manner based on identification information; a second communication unit which communicates with the wireless interface apparatus in a second communication manner; and a controller which receives the identification information corresponding to the wireless interface apparatus through the second communication unit.

The controller may set a communication connection with the wireless interface apparatus through the first communication unit based on the received identification information.

The controller may receive the identification information along with an instruction for powering on the broadcasting receiving apparatus.

The broadcasting receiving apparatus suitably further includes a storage unit to store the received identification information.

The broadcasting receiving apparatus suitably further includes a user input unit to receive an instruction from a user, wherein the controller sets a communication connection with the wireless interface apparatus through the first communication unit based on the stored identification information if an instruction for powering on the broadcasting receiving apparatus is input through the user input unit.

The controller may control the first communication unit to retry another communication connection based on the identification information stored in the storage unit, if the communication connection with the wireless interface apparatus fails.

The first communication manner may include Bluetooth communication.

The second communication manner may include infrared communication.

The identification information may include a Bluetooth address.

The present invention further provides a wireless interface apparatus of a broadcasting receiving apparatus, including: a first communication unit which communicates with the broadcasting receiving apparatus in a first communication manner based on identification information; a second communication unit which communicates with the broadcasting receiving apparatus in a second communication manner; and a controller which controls the second communication unit to transmit identification information corresponding to the first communication unit to the broadcasting receiving apparatus.

The controller suitably transmits the identification information along with an instruction for powering on the broadcasting receiving apparatus.

The wireless interface apparatus suitably further includes a user input unit to receive a user's instruction, wherein the controller transmits the identification information to the broadcasting receiving apparatus when receiving an instruction through the user input unit.

The first communication manner may include Bluetooth communication.

The second communication manner may include infrared communication.

The identification information may include a Bluetooth address.

The present invention additionally provides a method of controlling a broadcasting receiving apparatus which communicates with a wireless interface apparatus in a first communication manner based on identification information, the method including: receiving identification information corresponding to the wireless interface apparatus in a second communication manner.

The method suitably further includes setting a communication connection with the wireless interface apparatus in the first communication manner based on the received identification information.

The receiving of the identification information may include receiving the identification information along with an instruction for powering on the broadcasting receiving apparatus.

The method suitably further includes storing the received identification information.

The method suitably further includes receiving an instruction for powering on the broadcasting display apparatus through a user input unit provided in the broadcasting receiving apparatus, wherein the setting of the communication connection includes communicating with the wireless interface apparatus in the first communication manner based on the stored identification information.

The setting of the communication connection may further include retrying another communication connection based on the stored identification information if the communication connection with the wireless interface apparatus fails.

The first communication manner may include Bluetooth communication.

The second communication manner may include infrared communication.

The identification information may include a Bluetooth address.

The present invention also provides a method of controlling a wireless interface apparatus which communicates with a broadcasting receiving apparatus in a first communication manner based on identification information, the method including: transmitting the identification information corresponding to the first communication manner to the broadcasting receiving apparatus in a second communication manner.

The transmitting of the identification information to the broadcasting receiving apparatus may include transmitting the identification information along with an instruction for powering on the broadcasting receiving apparatus.

The method suitably further includes receiving a user's instruction, wherein the transmitting of the identification information to the broadcasting receiving apparatus includes transmitting the identification information when receiving the user's instruction.

The first communication manner may include Bluetooth communication.

The second communication manner may include infrared communication.

The identification information may include a Bluetooth address.

### BRIEF DESCRIPTION OF THE DRAWINGS

The above and/or other aspects of the present invention will become apparent and more readily appreciated from the following description of the exemplary embodiments, taken in conjunction with the accompanying drawings, in which:
FIG. 1 is a block diagram of a broadcasting receiving apparatus and a wireless interface apparatus according to an exemplary embodiment of the present invention;
FIGs. 2 though 4 show messages displayed in the broadcasting receiving apparatus according to an exemplary embodiment of the present invention; and
FIGs. 5 through 8 are flowcharts of controlling the broadcasting receiving apparatus and the wireless interface apparatus according to an exemplary embodiment of the present invention.

### DETAILED DESCRIPTION OF EXEMPLARY EMBODIMENTS OF THE INVENTION

Below, exemplary embodiments of the present invention will be described in detail with reference to accompanying drawings.

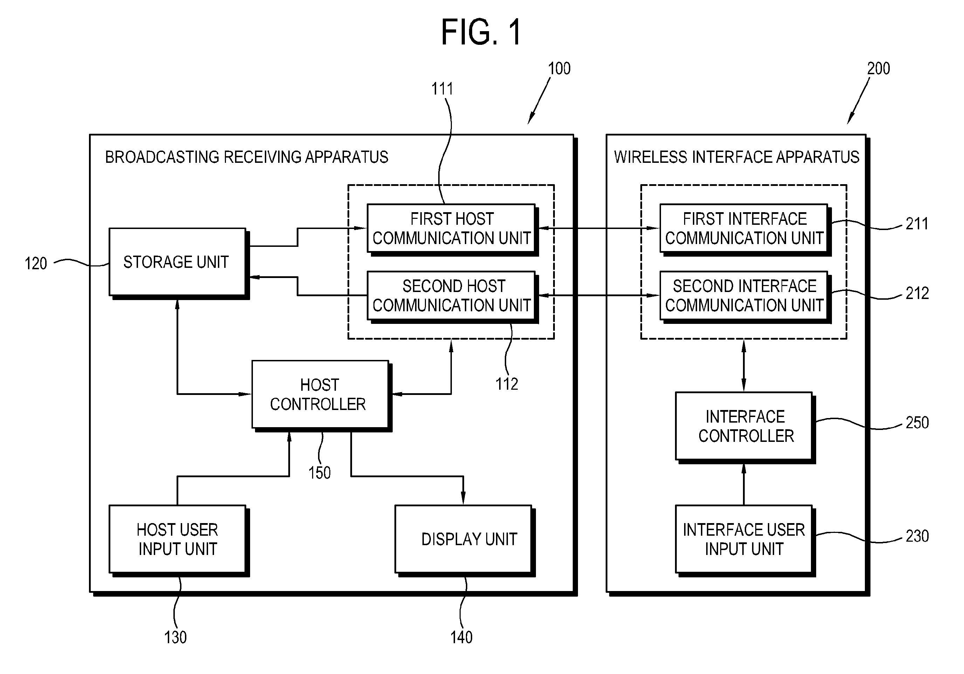

FIG. 1 is a block diagram of a broadcasting receiving apparatus 100 and a wireless interface apparatus 200 according to an exemplary embodiment of the present invention. The broadcasting receiving apparatus 100 may be a digital television, a set-top box, etc. The wireless interface apparatus 200 may be a remote controller, a wireless keyboard, a wireless headphone, etc., which communicates with the broadcasting receiving apparatus 100, and transmits a control signal for controlling the broadcasting receiving apparatus 100 to the broadcasting receiving apparatus 100.

In this exemplary embodiment, the broadcasting receiving apparatus 100 and the wireless interface apparatus 200 corresponds to a human interface device (HID) host having an HID function and an HID device targeted by the HID host, respectively.

As shown in FIG. 1, the broadcasting receiving apparatus 100 includes a first host communication unit 111, a second host communication unit 112, a storage unit 120, a host user input unit 130, a display unit 140, and a host controller 150.

According to an exemplary embodiment of the present invention, the broadcasting receiving apparatus 100 may include a video processor (not shown) that receives a broadcasting signal from a broadcasting station and a video signal from an external apparatus, such as a digital versatile disc (DVD) player, and processes the signal to have a format displayable in the display unit 140.

The first host communication unit 111 is a communication module that provides an interactive and omni-directional (or non-directional) communication, and communicates with the wireless interface apparatus 200 in a first communication manner based on predetermined communication standards.

The first host communication unit 111 performs the communication based on identification information of the wireless interface apparatus 200 under control of the host controller 150. For example, the first communication manner may be via Bluetooth, and the first host communication unit 111 may be a Bluetooth communication module (e.g., a Bluetooth chip) that performs the communication based on a Bluetooth address (or BD address) of the wireless interface apparatus 200.

In this exemplary embodiment, the Bluetooth address is 5 bytes, and is transmitted along with a control signal received through the second host communication unit 112 as being linked to a last part of the control signal. Here, the Bluetooth address of 5 bytes may include a lower address of 3 bytes, an upper address of 1 byte, and a non-significant address of 1 byte in sequence.

The second host communication unit 112 receives the control signal, which contains the identification information corresponding to the wireless interface apparatus 200, in a second communication manner under the control of the host controller 150. For example, the second communication manner may be an infrared communication manner, and the control signal may be an infrared signal for a non-interactive and directional communication to transmit a user's various instructions such as power on/off, channel selection, display and volume control, recording reservation, etc.

In this exemplary embodiment, the control signal is provided for powering on the broadcasting receiving apparatus 100, and may contain the identification information of the wireless interface apparatus 200.

The second host communication unit 112 is a communication module providing a directional communication, and may be an infrared communication module that receives the control signal corresponding to a user's instruction from the wireless interface apparatus 200.

The storage unit 120 stores at least one identification information received through the second host communication unit 112 under the control of the host controller 150. The storage unit 120 is a nonvolatile memory, and may be an erasable programmable read only memory (EPROM), a flash memory, a hard disk drive (HDD), etc.

The host user input unit 130 is a user interface for receiving a user's instruction, and receives a user's selection related to operations of the broadcasting receiving apparatus 100.

The host user input unit 130 may be a control panel provided in the broadcasting receiving apparatus 100 and having at least one button as a hot key. The host user input unit 130, for example, may at least include buttons such as menu keys and arrow keys. When the button of the control panel is pressed, the host controller 150 determines that the user's instruction is input.

The display unit 140 displays an image processed in the video processor (not shown). The display unit 140 may display messages related to success or failure of communication connection, communication disconnection, connection retry due to the disconnection, etc., which are performed through the first communication manner under the control of the host controller 150.

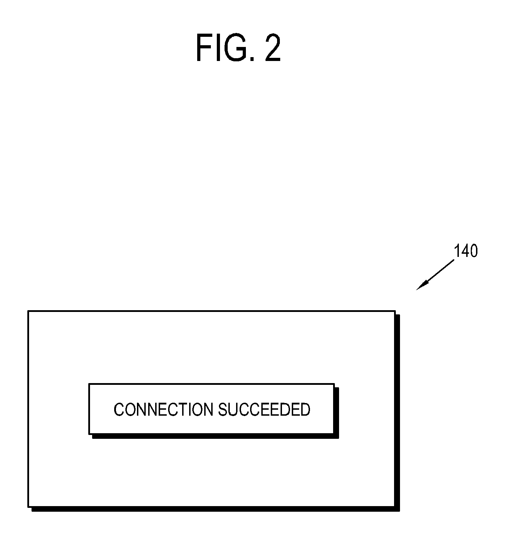

For example, as shown in FIGs. 2 through 4, the host controller 150 may control the display unit 140 to display a message as shown in FIG. 2 if communication connection set between the broadcasting receiving apparatus 100 and the wireless interface apparatus 200 succeeds. In the same way, if the communication connection set between the broadcasting receiving apparatus 100 and the wireless interface apparatus 200 fails, a corresponding message may be shown to a user.

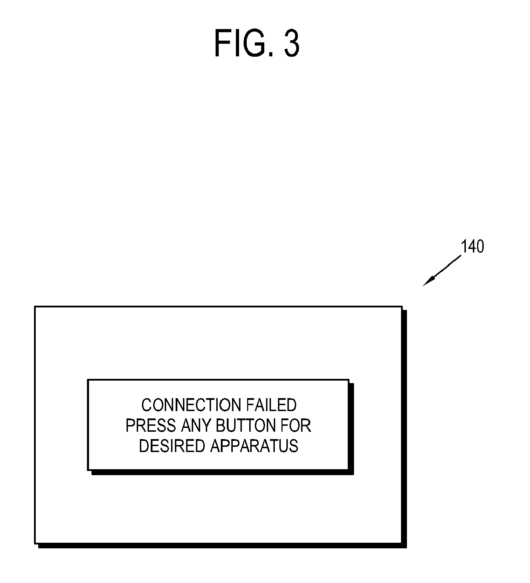

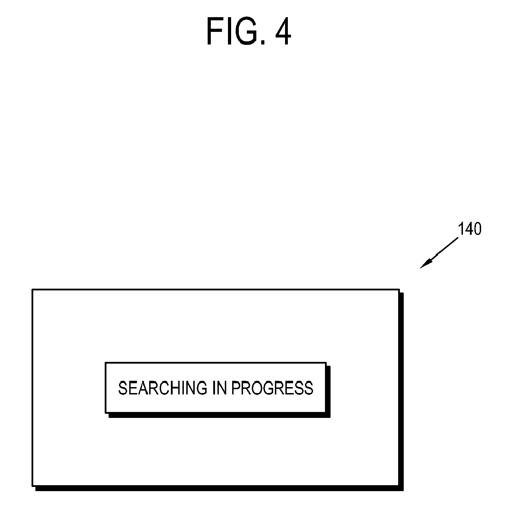

With regard to the messages shown in FIGs. 3 and 4, they will be explained below along with operations of the broadcasting receiving apparatus 100 and the wireless interface apparatus 200 when the connection is performed for the communication between the broadcasting receiving apparatus 100 and the wireless interface apparatus 200.

The host controller 150 generally controls the broadcasting receiving apparatus 100. In detail, the host controller 150 receives the control signal having the identification information corresponding to the wireless interface apparatus 200 through the second host communication unit 112, and controls the first host communication unit 111 so that the communication connection with the wireless interface apparatus 200 can be set based on the received identification information. Specifically, the host controller 150 controls the first host communication unit 111 to make a request for the communication connection based on the received identification information to the wireless interface apparatus 200. Here, the control signal may be provided for powering on the broadcasting receiving apparatus 100. That is, the host controller 150 may receive the identification information along with the instruction for powering on the broadcasting receiving apparatus 100, and control the storage unit 120 to store the received identification information.

Further, the host controller 150 controls the first host communication unit 111 to retry the communication connection based on the identification information stored in the storage unit 120 if the communication connection with the wireless interface apparatus 200 fails or is disconnected.

Here, the identification information used in retrying the communication connection may be the identification information last stored in the storage unit 120.

The host controller 150 may be a software program concerned, and a processor such as a microcomputer, a central processing unit (CPU), etc. to load and execute the software program.

Meanwhile, as shown in FIG. 1, the wireless interface apparatus 200 according to an exemplary embodiment of the present invention may include a first interface communication unit 211, a second interface communication unit 212, an interface user input unit 230 and an interface controller 250.

The first interface communication unit 211 is a communication module that provides an interactive and omni-directional (or non-directional) communication, and communicates with the broadcasting receiving apparatus 100 according to predetermined communication standards.

The first interface communication unit 211 performs the communication in the first communication manner based on the identification information of the wireless interface apparatus 200 under control of the interface controller 250. For example, the first communication manner may be the Bluetooth communication manner, and the first interface communication unit 211 may be a Bluetooth communication module (e.g., a Bluetooth chip), a Bluetooth address (or BD address) corresponding to the Bluetooth communication module which is transmitted to the broadcasting receiving apparatus 100 along with the control signal transmitted through the second interface communication unit 212.

In this exemplary embodiment, the Bluetooth address may have total 5 bytes, which includes a lower address of 3 bytes, an upper address of 1 byte, and a non-significant address of 1 byte.

The second interface communication unit 212 transmits the control signal, which contains the identification information, to the broadcasting receiving apparatus 100 in the second communication manner under the control of the interface controller 250. Here, the control signal may be an infrared (IR) signal for a non-interactive and directional communication to transmit a user's various instructions such as power on/off, channel selection, display and volume control, recording reservation, etc. for the broadcasting receiving apparatus 100.

In this exemplary embodiment, the control signal is provided for powering on the broadcasting receiving apparatus 100, and may contain the identification information corresponding to the first interface communication unit 211. That is, the wireless communication apparatus 200 may transmit the identification information along with the instruction for powering on the broadcasting receiving apparatus 100.

In this exemplary embodiment, the second interface communication unit 212 is a communication module that provides a non-interactive and directional communication, and may be an infrared communication module that transmits various control signals to the broadcasting receiving apparatus 100 according to a user's instructions.

The interface user input unit 230 is a user interface (UI) for receiving a user's instruction, and receives a user's selection related to operations of the broadcasting receiving apparatus 100.

The interface user input unit 230 may be a control panel provided with at least one button as a hot key. The interface user input unit 230 may include number keys, menu keys, arrow keys, recording reservation button, and the like. When the button of the control panel is pressed, the interface controller 250 determines that the user's instruction is input.

The interface controller 250 generally controls the wireless apparatus 100. In detail, the interface controller 250 transmits the control signal having the identification information corresponding to the wireless interface apparatus 200 through the second interface communication unit 212 when receiving the instruction of transmitting the control signal to the broadcasting receiving apparatus 100 through the interface user input unit 230.

Further, the interface controller 250 controls the first interface communication unit 211 to perform the communication with the broadcasting receiving apparatus 100 in the first communication manner based on the identification information concerned, when receiving the request for the communication connection using predetermined identification information from the broadcasting receiving apparatus 100.

The interface controller 250 may be a software program concerned, and a processor such as a microcomputer, a central processing unit (CPU), etc. to load and execute the software program.

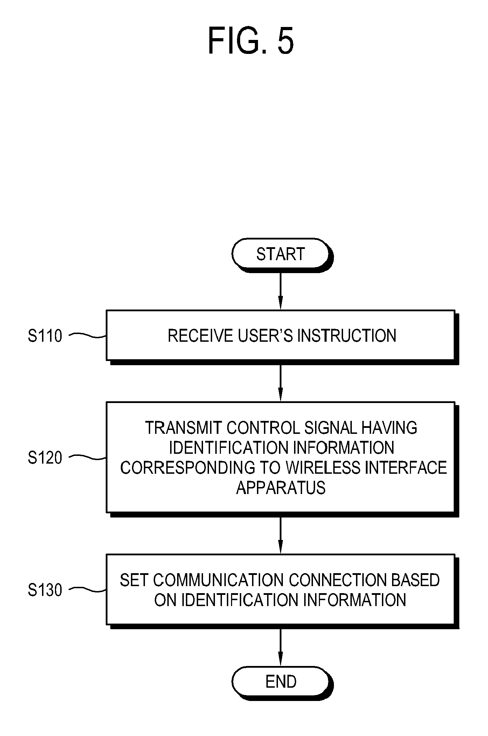

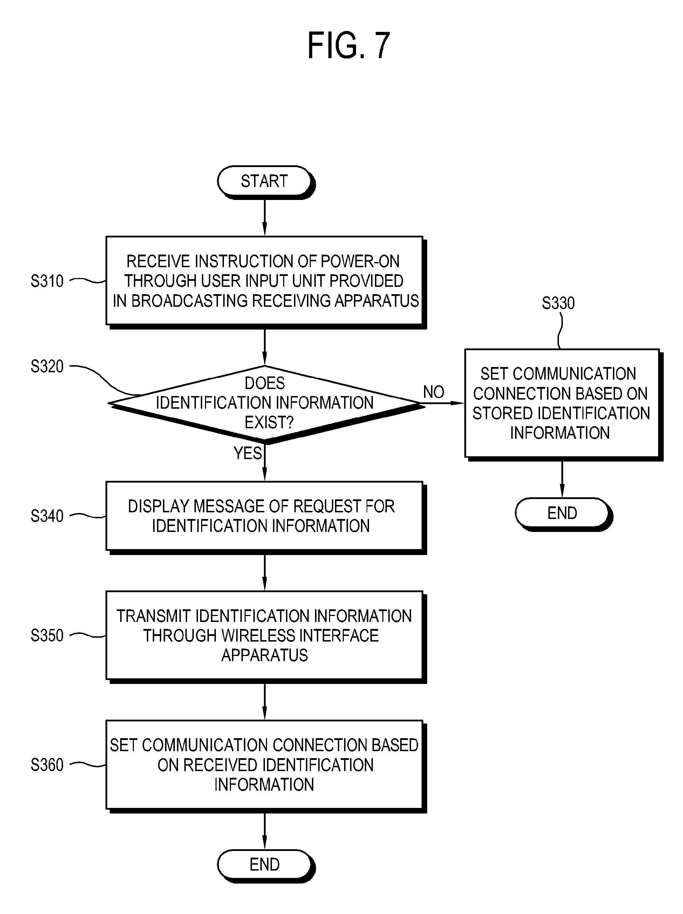

With this configuration, a control method for the broadcasting receiving apparatus 100 and the wireless interface apparatus 100 will be described with reference to FIGs. 5 through 8.

First, as shown in FIG. 5, the wireless interface apparatus 200 receives the instruction about transmission of the control signal from a user through the interface user input unit 230 (S110). In this exemplary embodiment, the user's instruction corresponds to the power-on of the broadcasting receiving apparatus 100, and may be a directional operation of "point and click."

Then, the interface controller 250 transmits the control signal, which has the identification information corresponding to the first interface communication unit 211 that performs the communication in the first communication manner, to the broadcasting receiving apparatus 100 in the second communication manner through the second interface communication unit 212 (S120). Here, the second communication manner may be the infrared communication manner, and the control signal may be the infrared (IR) signal for powering on the broadcasting receiving apparatus 100. On the other hand, the first communication manner may be the Bluetooth communication manner, and the identification information contained in the signal for the power-on may be the Bluetooth address for carrying out the Bluetooth communication.

Thus, the wireless interface apparatus 200 sets the communication connection with the broadcasting receiving apparatus 100 based on the transmitted identification information, and performs the communication in the first communication manner (S130).

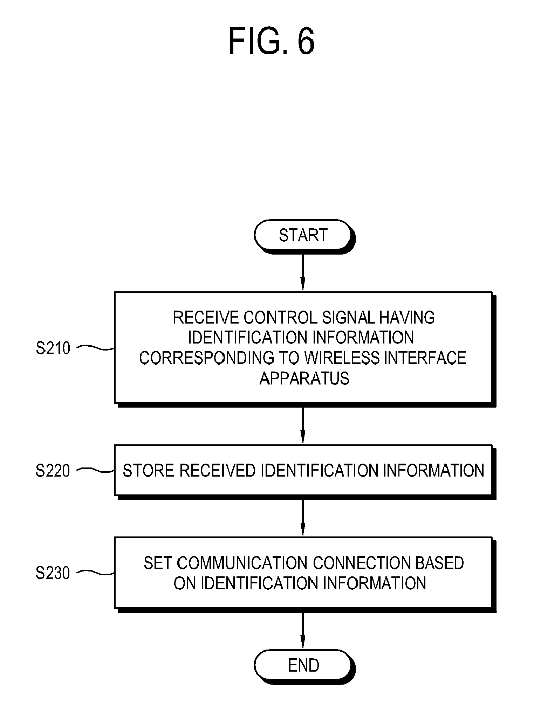

As shown in FIG. 6, the broadcasting receiving apparatus 100 receives the identification information transmitted at the stage S120 through the second host communication unit 112 in the second communication manner (S210).

Then, the host controller 150 stores the identification information received at the stage S210 in the storage unit 120 (S220).

The host controller 150 controls the first host communication unit 111 to set the communication connection for communication with the wireless interface apparatus 200 in the first communication manner based on the identification information received at the stage 210 (S230). At this time, the broadcasting receiving apparatus 100 resets the host controller 150, i.e., the CPU so as to drive various software applications, and tries the communication connection with the wireless interface apparatus 200 based on the identification information.

At the stage S230, if the communication connection between the broadcasting receiving apparatus 100 and the wireless interface apparatus 200 succeeds, the host controller 150 may control the display unit 140 to display the message that the connection of the apparatus succeeded (refer to FIG. 2).

Similarly, if the communication connection between the broadcasting receiving apparatus 100 and the wireless interface apparatus 200 fails or the successful connection is disconnected, the host controller 150 may also control the display unit 140 to display the messages concerned.

At the stage S230, if the communication connection between the broadcasting receiving apparatus 100 and the wireless interface apparatus 200 fails or is disconnected, the host controller 150 controls the first host communication unit 111 to retry the communication connection based on the identification information stored at the stage S140. Here, the host controller 150 may control the first host communication unit 111 to continuously retry the communication connection until the communication connection is successfully achieved.

According to an exemplary embodiment of the present invention, a user performs the "point and click" on the wireless interface apparatus 200 to turn on the broadcasting receiving apparatus 100, and at the same time the identification information of the wireless interface apparatus 200 is transmitted to the broadcasting receiving apparatus 100, so that it is possible to set the communication connection between the broadcasting receiving apparatus 100 and the wireless interface apparatus 200 through the directional communication without a user's separate input or searching operation.

According to another exemplary embodiment of the present invention, the broadcasting receiving apparatus 100 may receive the instruction for the power-on through not the wireless interface apparatus 200, but the host user input unit 130 provided in the broadcasting receiving apparatus 100 (S310).

Then, the host controller 150 determines whether or not the storage unit 120 has the identification information corresponding to the wireless interface apparatus 200 (S320).

At the stage S320, if the storage unit 120 has the identification information, the host controller 150 controls the first host communication unit 111 to set the communication connection with the wireless interface apparatus 200 based on the stored identification information (S330).

At the stage S330, if the communication connection between the broadcasting receiving apparatus 100 and the wireless interface apparatus 200 fails or is disconnected, the host controller 150 controls the first host communication unit 111 to retry the communication connection based on the identification information stored in the storage unit 120. Here, the host controller 150 may control the first host communication unit 111 to continuously retry the communication connection until the communication connection is successfully achieved.

On the other hand, at the stage S320, if the storage unit 120 does not have the stored identification information, the host controller 150 may control the display unit 140 to display the message of the request for the identification information (S340).

In detail, referring to FIG. 3, the host controller 150 may control the display unit 140 to display a message of notifying that there is no wireless interface apparatus 200 connected thereto and a message of requesting for the communication connection to a user.

Thus, a user may press any one of the buttons provided in the interface user input unit 230 of the wireless interface apparatus 200. Then, the interface controller 250 controls the second interface communication unit 212 to transmit the control signal having the identification information corresponding to the first interface communication unit 211 (S350). At the stage S350, the control signal may be a non-interactive and directional infrared (IR) signal.

Further, the host controller 150 controls the first host communication unit 111 to set the communication connection with the wireless interface apparatus 200 based on the received identification information (S360).

As described above, according to an exemplary embodiment of the present invention, even though the instruction for the power-on is input through the host user input unit 130 provided in the broadcasting receiving apparatus 100, the identification information is transmitted in response to the "point and click" from the wireless interface apparatus 200, without separate searching operations. Thus, the communication between the broadcasting receiving apparatus 100 and the wireless interface apparatus 200 may be performed through the directional communication.

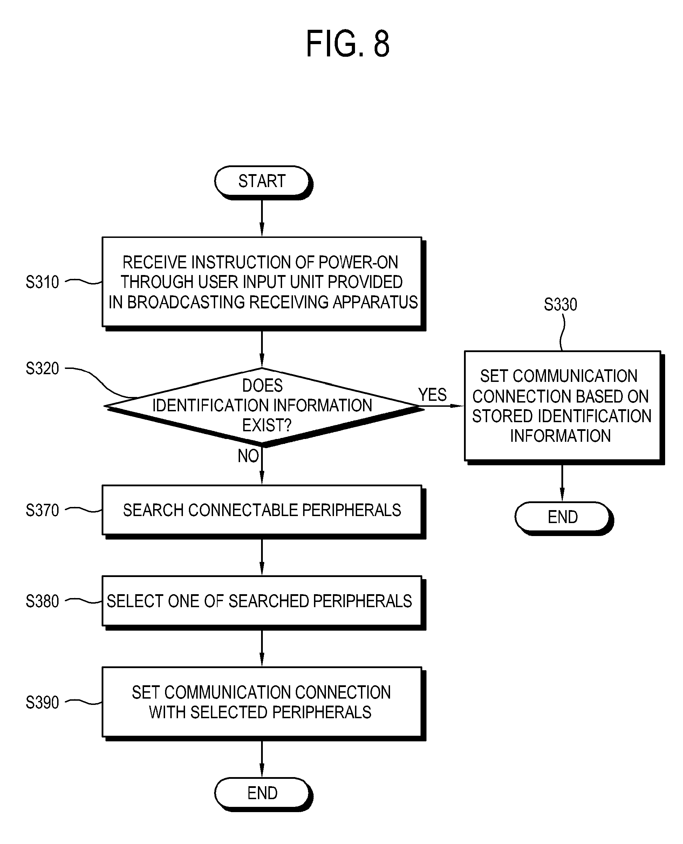

Meanwhile, according to a third exemplary embodiment of the present invention, as shown in FIG.8, if there is no identification information stored at the stage S220, the host controller 150 may search connectable peripherals (S370).

Here, as shown in FIG. 4, the host controller 150 may control the display unit 140 to show a user a message that the peripherals are being searched.

Then, a user selects one of the searched peripherals, i.e., the wireless interface apparatus 200 for the communication, through the host user input unit 130 (S380). Here, the host controller 150 may control the display unit 140 to show a user the searched peripherals so that a user can easily select one of them.

At the stage S380, the selection may be conveniently achieved through the least control panel provided in the host user input unit 130.

Then, the host controller 150 controls the first host communication unit 111 to set the communication connection with the wireless interface apparatus 200 based on the identification information of the selected peripheral (S390).

As described above, the exemplary embodiments of the present invention provide a broadcasting receiving apparatus, which is convenient to a user since a searching process or an identification-information input process is omitted when using an omni-directional wireless interface, a wireless interface apparatus and a control method thereof.

Further, the exemplary embodiments of the present invention provide a broadcasting receiving apparatus, which can store received identification information therein and implement communication with facility based on the stored identification information, a wireless interface apparatus and a control method thereof.

Although a few exemplary embodiments of the present invention have been shown and described, it will be appreciated by those skilled in the art that changes may be made in these exemplary embodiments without departing from the principles and spirit of the invention, the scope of which is defined in the appended claims and their equivalents.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A broadcasting receiving apparatus (100) comprising:
a first communication unit (111) which communicates with a wireless interface apparatus (200) in a first communication manner based on identification information;
a second communication unit (112) which communicates with the wireless interface apparatus (200) in a second communication manner; and
a controller (150) which receives the identification information corresponding to the wireless interface apparatus (200) through the second communication unit (112).

2. The broadcasting receiving apparatus (100) according to claim 1, wherein the controller (150) sets a communication connection with the wireless interface apparatus (200) through the first communication unit (111) based on the received identification information.

3. The broadcasting receiving apparatus (100) according to claim 1, wherein the controller (150) receives the identification information along with an instruction for powering on the broadcasting receiving apparatus (100).

4. The broadcasting receiving apparatus (100) according to any one of claims 1 to 3, further comprising:
a storage unit (120) which stores the received identification information, and
a user input unit (130) which receives an instruction from a user,
wherein the controller (150) sets a communication connection with the wireless interface apparatus (200) through the first communication unit (111) based on the stored identification information if an instruction for powering on the broadcasting receiving apparatus (100) is input through the user input unit (130).

5. The broadcasting receiving apparatus (100) according to claim 4, wherein the controller (150) controls the first communication unit (111) to retry a communication connection based on the identification information stored in the storage unit (120) if the communication connection with the wireless interface apparatus (200) fails.

6. A wireless interface apparatus (200) of a broadcasting receiving apparatus (100), comprising:
a first communication unit (211) which communicates with the broadcasting receiving apparatus (100) in a first communication manner based on identification information;
a second communication unit (212) which communicates with the broadcasting receiving apparatus (100) in a second communication manner; and
a controller (250) which controls the second communication unit (212) to transmit identification information corresponding to the first communication unit (211) to the broadcasting receiving apparatus (100).

7. The wireless interface apparatus (200) according to claim 6, wherein the controller (250) transmits the identification information along with an instruction for powering on the broadcasting receiving apparatus (100).

8. The wireless interface apparatus (200) according to claim 6 or 7, further comprising a user input unit (230) which receives a user's instruction,
wherein the controller (250) transmits the identification information to the broadcasting receiving apparatus (100) when receiving an instruction through the user input unit (230).

9. A method of controlling a broadcasting receiving apparatus (100) which communicates with a wireless interface apparatus (200) in a first communication manner based on identification information, the method comprising:
receiving identification information corresponding to the wireless interface apparatus (200) in a second communication manner.

10. The method according to claim 9, further comprising setting a communication connection with the wireless interface apparatus (200) in the first communication manner based on the received identification information.

11. The method according to claim 9, wherein the receiving of the identification information includes receiving the identification information along with an instruction for powering on the broadcasting receiving apparatus (100).

12. The method according to any one of claims 9 to 11, further comprising:
storing the received identification information, and
receiving an instruction for powering on the broadcasting receiving apparatus (100) through a user input unit (130) provided in the broadcasting receiving apparatus (100),
wherein the setting of the communication connection includes communicating with the wireless interface apparatus (200) in the first communication manner based on the stored identification information.

13. A method of controlling a wireless interface apparatus (200) which communicates with a broadcasting receiving apparatus (100) in a first communication manner based on identification information, the method comprising:
transmitting the identification information corresponding to the first communication manner to the broadcasting receiving apparatus (100) in a second communication manner.

14. The method according to claim 13, wherein the transmitting of the identification information to the broadcasting receiving apparatus (100) includes transmitting the identification information along with an instruction for powering on the broadcasting receiving apparatus (100).

15. The method according to claim 13 or 14, further comprising receiving a user's instruction,
wherein the transmitting of the identification information to the broadcasting receiving apparatus (100) includes transmitting the identification information when receiving the user's instruction.
